# EUROPÄISCHE PATENTSCHRIFT

(11) **EP 3 719 437 B1**
(45) Veröffentlichungstag und Bekanntmachung des Hinweises auf die Patenterteilung: **26.01.2022**
(21) Anmeldenummer: 20167514.7
(22) Anmeldetag: 01.04.2020
(51) Int. Cl.: F41A 23/18, B60R 7/14, F41C 33/02

(54) **HALTEVORRICHTUNG**
HOLDING DEVICE
DISPOSITIF DE MAINTIEN

(30) Priorität: 04.04.2019 DE 102019108863
(43) Veröffentlichungstag der Anmeldung: 07.10.2020
(73) Patentinhaber: Krauss-Maffei Wegmann GmbH & Co. KG, 80997 München (DE)
(72) Erfinder: MOCIGEMBA, Jaroslaw, 34127 Kassel (DE)
(74) Vertreter: Feder Walter Ebert

(56) Entgegenhaltungen:
- EP-A2- 0 813 038
- EP-A2- 1 966 562
- WO-A1-03/012361
- WO-A2-2006/121965

## Beschreibung

Die Erfindung betrifft eine Haltevorrichtung gemäß dem Oberbegriff des Patentanspruchs 1.

Derartige Haltevorrichtungen dienen dazu, Handfeuerwaffen, wie beispielsweise Maschinengewehre oder Maschinenpistolen, aufzunehmen und zu lagern, so dass diese in den Haltevorrichtungen sicher verstaut werden können. Gerade in militärischen Fahrzeugen mit beengten Platzverhältnissen ist es nicht nur unpraktikabel, sondern es kann sogar zu einer Gefahr werden, wenn Soldaten Handfeuerwaffen nicht sicher verstauen können, sondern diese die ganze Zeit bei sich tragen müssen. Insbesondere in militärischen Fahrzeugen wird daher zur sicheren Verstauung von Handfeuerwaffen auf Haltevorrichtungen zurückgegriffen.

Da entsprechende Fahrzeuge jedoch bei schnellen Geländefahrten mitunter großen Beschleunigungen ausgesetzt sind, steigt in solchen Situationen auch die Gefahr eines ungewollten Lösens der Handfeuerwaffen aus den Haltevorrichtungen. Aus diesem Grund ergeben sich besondere Anforderungen an die lagegesicherte Halterung der Handfeuerwaffen in militärischen Fahrzeugen.

Entsprechende Halterungen weisen in der Regel einen Grundkörper auf, der beispielsweise mit einer Innenseite des Fahrzeugs verbunden sein kann. An einer Haltefläche des Grundkörpers, die sich dann zumeist parallel zu der Fahrzeuginnenseite erstreckt, sind mehrere Halteelemente zur Halterung der Handfeuerwaffe angeordnet.

Um die Handfeuerwaffe sicher zu halten, genügt es in der Regel nicht, nur ein einziges Halteelement vorzusehen, insbesondere wenn es sich um größere Handfeuerwaffen handelt. In der Praxis bewährt haben sich Haltevorrichtungen mit zwei Halteelementen, wobei ein Halteelement zur Halterung der Waffenrohrmündung und ein Halteelement zur Halterung eines hinteren Waffenteils, wie beispielsweise dem Waffenschaft, dient. Durch die Halterung der Waffenrohrmündung, also dem vordersten Teil der Handfeuerwaffe, können auch Bewegungen der Waffe in Rohrrichtung zuverlässig unterbunden werden.

Eine entsprechende Halterung ist beispielsweise aus der DE 10 2010 036 789 A1 bekannt. Diese Halterung hat sich in der Vergangenheit als sehr zuverlässig erwiesen, da mit dieser selbst unterschiedliche Waffentypen sicher aufgenommen werden können.

In der WO 2006/121965 A2 ist ein Holster für eine Waffe offenbart. Die zu halternde Waffe kann mit der Waffenrohrmündung in ein vorderes Halteelement des Holsters eingesteckt werden. Danach kann der Waffenschaft in ein zweites Halteelement eingeschwenkt werden, so dass die Waffe dann vorne und hinten im Holster gehaltert ist.

Als nachteilig hat es sich jedoch herausgestellt, dass die Entnahme der Handfeuerwaffe aus der Halterung oder die Verstauung der Waffe in der Halterung mitunter aufwendig ist. Insbesondere wenn die Waffen sehr schnell entnommen und einsatzbereit gemacht oder sehr schnell verstaut werden müssen, kann es dazu kommen, dass sich die Waffen verkanten und an den Halteelementen hängen bleiben, so dass mehrere Anläufe benötigt werden, um eine Waffe zu verstauen oder zu entnehmen.

Zwar könnte diesem Problem dadurch entgegengetreten werden, dass die Handfeuerwaffe mit einem gewissen Spiel in der Haltevorrichtung aufgenommen werden würde, dies hätte dann aber den unerwünschten Nebeneffekt, dass die Waffe in der Halterung keine fest definierte Position hätte und gerade bei Fahrten über unebenes Gelände in der Haltevorrichtung klappern würde. Eine sicherere Verstauung wäre daher mit einer solchen Haltevorrichtung nicht möglich.

Davon ausgehend stellt sich die Erfindung die Aufgabe, eine Haltevorrichtung zu schaffen, die gleichzeitig eine einfache Entnahme sowie aber auch eine einfache und sichere Verstauung der Waffe ermöglicht.

Diese Aufgabe wird mit einer Haltevorrichtung **gelöst**, die die im Patentanspruch 1 definierten Merkmale aufweist. Vorteilhafte Weiterbildungen sind in den abhängigen Ansprüchen enthalten.

Ein schwenkbeweglich mit dem Grundkörper verbundenes Halteelement ermöglicht, dass die Handfeuerwaffe in dem Halteelement gehaltert ist, diese aber gleichwohl noch gegenüber dem Grundkörper bewegt werden kann. Durch die parallel zu der Haltefläche des Grundkörpers angeordnete Schwenkachse kann die Handfeuerwaffe seitlich ausgeschwenkt werden. Dies ermöglicht, dass zunächst nur ein Ende der Handfeuerwaffe mit dem schwenkbaren Halteelement verbunden werden muss und die Handfeuerwaffe dann im zumindest teilweise gehalterten Zustand zusammen mit dem Halteelement um die Schwenkachse bewegt werden kann. Da die Waffe nicht mit beiden Halteelementen gleichzeitig verbunden werden muss und sogar in einem Halteelement gehaltert noch seitlich gegenüber dem Grundkörper verschwenkt werden kann, kann die Handfeuerwaffe deutlich einfacher verstaut oder aus der Halterung entnommen werden. Zur Entnahme der Waffe aus der Haltevorrichtung ist es nicht erforderlich, die Handfeuerwaffe relativ zum Halteelement zu verkippen, so dass die Waffe zumindest mit einem Halteelement, insbesondere dem ersten Halteelement, schwenkgekoppelt ist.

Erfindungsgemäß ist vorgesehen, dass das erste Halteelement ein Aufnahmeelement zur Aufnahme der Waffenrohrmündung aufweist. Das Aufnahmeelement kann derart ausgestaltet sein, dass die Waffenrohrmündung sicher im ersten Halteelement gehaltert werden kann.

Es hat sich als vorteilhaft herausgestellt, wenn das Aufnahmeelement eine die Waffenrohrmündung spielfrei umschließende Aufnahmebuchse aufweist. Die Waffenrohrmündung kann in die Aufnahmebuchse einsteckbar sein und dann zusammen mit dem ersten Halteelement um die Schwenkachse verschwenkt werden. Durch die spielfreie Aufnahme der Waffenrohrmündung in der Aufnahmebuchse kann die Handfeuerwaffe sicher in der Haltevorrichtung gehaltert werden. Spielfrei bedeutet in diesem Zusammenhang, dass die Handfeuerwaffe nur zusammen mit dem ersten Halteelement verschwenkt werden kann. Eine Schwenk- oder Kippbewegung der Waffe relativ gegenüber der Aufnahmebuchse bzw. dem ersten Halteelement ist nicht möglich.

Weiterhin hat es sich als vorteilhaft herausgestellt, wenn das Aufnahmeelement eine topfförmige Aufnahmebuchse aufweist. Diese Ausgestaltung ermöglicht, dass die Waffenrohrmündung auf einfache Weise in die Aufnahmebuchse eingesteckt werden kann. Wenn die Waffenrohrmündung entsprechend eingesteckt ist, kann die Waffe nicht relativ gegenüber dem Aufnahmeelement bzw. der Aufnahmebuchse verschwenkt oder verkippt werden, sondern die Waffe kann dann nur zusammen mit dem Aufnahmeelement um die Schwenkachse bewegt werden. Die Aufnahmebuchse kann zylindrisch ausgestaltet sein, so dass die ebenfalls zylindrische Waffenrohrmündung mit deren zylindrischer Umfangsfläche, insbesondere vollflächig, an der Aufnahmebuchse anliegen kann.

Das Aufnahmeelement kann eine Einführhilfe, bspw. in Form eines Einführkonus, aufweisen, die das Einführen der Waffenrohrmündung vereinfacht. Über die Einführhilfe kann die Waffenrohrmündung automatisch zentriert werden, so dass sich diese zuverlässig in die Aufnahmebuchse einstecken lässt. Es ist insoweit nicht erforderlich, die Waffenrohrmündung beim Einführen mit einer Hand anzufassen und gegenüber dem Aufnahmeelement manuell auszurichten.

Ferner hat es sich als vorteilhaft herausgestellt, wenn die Halteelemente die Handfeuerwaffe in einer Halterungsstellung zumindest in einer Richtung spielfrei haltern. Dadurch kann der Abstand der Handfeuerwaffe gegenüber der Haltefläche festgelegt sein, so dass eine Relativbewegung der Handfeuerwaffe gegenüber den Halteelementen und damit auch gegenüber dem Grundkörper zuverlässig verhindert werden kann. Die Halteelemente können die Handfeuerwaffe zumindest in einer Richtung normal zur Haltefläche spielfrei haltern. Selbst wenn die Haltevorrichtung in militärischen Fahrzeugen eingesetzt wird, kann ein Klappern der Waffe in der Haltevorrichtung auch bei schnellen Bewegungen zuverlässig verhindert werden.

Zurrmittel, um die Waffe neben den Haltevorrichtungen zusätzlich zu sichern, werden nicht benötigt. Vorteilhaft ist die Position der Waffe in der Halterungsstellung derart festgelegt, dass diese sicher fixiert ist und nicht klappern kann. Gleichwohl ist es vorteilhaft, wenn die Haltevorrichtung derart ausgestaltet ist, dass sich die Waffe in der Halterungsstellung in Waffenrohrrichtung bzw. in Spannrichtung bewegen lässt.

Es hat sich weiterhin als vorteilhaft erwiesen, wenn das erste Halteelement schwenkbeweglich mit dem Grundkörper verbunden ist. Durch eine schwenkbegliche Verbindung des ersten Halteelements mit dem Grundkörper kann zunächst die Waffenrohrmündung mit dem ersten Halteelement verbunden werden, insbesondere in dieses eingesteckt werden. Die Handfeuerwaffe kann dann zusammen mit dem ersten Halteelement um die Schwenkachse verschwenkt werden, bis der Waffenschaft mit dem zweiten Halteelement verbunden bzw. in diesem gehaltert werden kann. Bei einer entsprechenden Schwenkbewegung kann die Waffe am Waffenschaft angefasst und so zusammen mit dem ersten Halteelement bewegt bzw. verschwenkt werden. Aufgrund der Halterung im ersten Halteelement ist die Waffe gegenüber diesem stets festgelegt.

In einer alternativen Ausgestaltung kann das zweite Halteelement schwenkbeweglich mit dem Grundkörper verbunden sein. Bei dieser Ausgestaltung kann das erste Halteelement so ausgestaltet sein, wie das nachfolgend beschriebene zweite Halteelement und das zweite Halteelement kann so ausgestaltet sein, wie das nachfolgend beschriebene erste Halteelement.

Das zweite Halteelement kann gemäß einer bevorzugten Weiterbildung fest mit dem Grundkörper verbunden sein. Eine feste Verbindung des zweiten Halteelements ermöglicht eine zuverlässige Halterung der Handfeuerwaffe, so dass sich diese nicht gegenüber dem Grundkörper bewegen kann. Das zweite Halteelement kann demnach dafür sorgen, dass sich die Handfeuerwaffe in der Halterungsstellung nicht um die Schwenkachse bewegen kann, sondern sicher am Grundkörper befestigt ist.

Im Hinblick auf eine sichere Halterung hat es sich ferner als vorteilhaft erwiesen, wenn das erste Halteelement und das zweite Halteelement eine Zweipunktlagerung für die Handfeuerwaffe bilden. Durch eine solche Zweipunktlagerung kann auch bei schnellen Geländefahrten die Handfeuerwaffe sicher in der Haltevorrichtung gehaltert werden. Die Halteelemente können voneinander beabstandet sein, so dass auch auf die Handfeuerwaffe wirkende Kippmomente zuverlässig aufgenommen werden können. In Weiterbildung der Erfindung hat es sich als vorteilhaft herausgestellt, wenn der Abstand zwischen dem ersten und dem zweiten Halteelement einstellbar ist. So können auch Waffen verschiedener Größe in der Haltevorrichtung gehaltert werden.

Weiter hat es sich als vorteilhaft herausgestellt, wenn das erste Halteelement und das zweite Halteelement nach Art einer Klemmhalterung zusammenwirken, in die die Handfeuerwaffe einklemmbar ist. Durch eine solche Klemmhalterung kann die Waffe sicher in der Haltevorrichtung gehaltert werden und gleichzeitig kann die Waffe ohne den Einsatz von Werkzeug intuitiv in der Haltevorrichtung verstaut oder aus dieser entnommen werden. Die Halteelemente können die Handfeuerwaffe in der Halterungsstellung formschlüssig umgreifen, insbesondere ein vorderes und ein hinteres Ende der Handfeuerwaffe.

Die Handfeuerwaffe kann zunächst mit dem ersten Halteelement verbunden und dann um die Schwenkachse derart verschwenkt werden, dass das andere Ende der Waffe in das zweite Halteelement einrasten kann. Die beiden Halteelemente können insofern nach Art einer Rasthalterung zusammenwirken.

Weiterhin hat es sich als vorteilhaft erwiesen, wenn die Haltevorrichtung derart ausgestaltet ist, dass die Handfeuerwaffe in der Halterungsstellung von dem ersten Halteelement gegen das zweite Halteelement drückbar ist. Die Handfeuerwaffe kann von der von dem ersten Halteelement ausgeübten Kraft derart gegen das zweite Halteelement gedrückt werden, dass die Waffe formschlüssig mit der Haltevorrichtung verbunden sein kann. Eine solche formschlüssige Verbindung ermöglicht eine besonders zuverlässige Sicherung der Handfeuerwaffe. Um die Waffe aus der Halterungsvorrichtung zu entnehmen, muss das erste Halteelement entgegen der Kraftrichtung bewegt werden.

Im Hinblick auf die Ausgestaltung des ersten Halteelements hat es sich als vorteilhaft herausgestellt, wenn das Aufnahmeelement in Richtung des zweiten Halteelements vorgespannt ist. Durch die Vorspannung kann die Handfeuerwaffe in der Halterungsstellung zuverlässig zwischen den beiden Halteelementen eingeklemmt sein. Um die Handfeuerwaffe aus der Haltevorrichtung zu entnehmen, muss die Vorspannkraft überwunden und die Waffe entgegen der Vorspannkraft bewegt werden. Die Vorspannung kann über eine Feder, insbesondere eine Spiraldruckfeder, aufgebracht werden.

Es hat sich ferner als vorteilhaft herausgestellt, wenn das Aufnahmeelement, insbesondere durch die Handfeuerwaffe, entgegen der Vorspannkraft bewegbar ist. Die Vorspannkraft kann dabei derart bemessen sein, dass diese zwar ohne große Kraftanstrengung per Hand überwunden werden kann, gleichwohl aber groß genug ist, um die Waffe sicher zu halten. Auch durch die bei schnellen Geländefahrten auf die Handfeuerwaffe ausgeübten Kräfte kann die Handfeuerwaffe nicht in genügendem Maße entgegen der Vorspannkraft bewegt werden. Das Aufnahmeelement kann um einen Spannweg in einer Spannrichtung bewegbar sein. Bei einer entsprechenden Bewegung wird eine die Vorspannkraft bereitstellende Feder gespannt. Die Feder kann in Spannrichtung komprimierbar sein. Die Spannrichtung und die Waffenrohrrichtung können parallel zueinander sein. Die Spannrichtung kann senkrecht zur Haltefläche des Grundelements sein.

Im Hinblick auf die Vorspannung hat es sich weiterhin als vorteilhaft erwiesen, wenn diese über eine Einstellvorrichtung einstellbar ist. Über die Einstellvorrichtung kann beispielsweise der Federweg des ersten Halteelements eingestellt werden. Die Einstellvorrichtung kann dafür ein insbesondere manuell betätigbares Einstellelement, beispielsweise eine Schraube, umfassen, über welche die Kraft des Federelements eingestellt werden kann. Auf diese Weise kann auch die Haltekraft, mit welcher die Handfeuerwaffe von dem ersten Halteelement gegen das zweite Halteelement gedrückt wird, eingestellt werden. Bei größeren Handfeuerwaffen kann es sinnvoll sein, eine größere Federkraft einzustellen als bei kleineren Waffen.

In Hinblick auf die Anordnung des ersten Halteelements hat es sich als vorteilhaft erwiesen, wenn dieses zwischen zwei mit dem Grundkörper verbundenen Schwenkbacken angeordnet und mit diesen schwenkbeweglich verbunden ist. Die beiden Schwenkbacken können ein Schwenklager für das erste Halteelement bilden, welches eine Bewegung des ersten Halteelements um die Schwenkachse ermöglichen kann. Zwei Schwenkbacken ermöglichen eine möglichst gleichmäßige Kraftverteilung, so dass ein Verkanten des ersten Halteelements bzw. der Handfeuerwaffe beim Verschwenken nicht befürchtet werden muss. Weiterhin ermöglicht diese Doppellagerung, dass auch schwerere Handfeuerwaffen aufgenommen werden können. Gerade wenn die Handfeuerwaffe zusammen mit dem ersten Halteelement ausgeschwenkt ist, können mitunter große Kräfte und Drehmomente auf die Schwenkbacken wirken. Die Schwenkachse kann sich durch das erste Halteelement und durch die Schwenkbacken erstrecken. Das erste Halteelement kann über eine Schrauben- oder Bolzenverbindung mit den Schwenkbacken verbunden sein. Die Schwenkachse kann mit der Schrauben- oder Bolzenlängsachse übereinstimmen. Das erste Halteelement kann zwischen den beiden Schwenkbacken nach Art einer Wiege aufgehängt sein.

Weiterhin hat es sich als vorteilhaft erwiesen, wenn der Grundkörper zwei vorspringende Befestigungsabschnitte aufweist, an denen die Schwenkbacken angeordnet sind. Die Befestigungsabschnitte können in Richtung der Normalen der Haltefläche hervorspringen und als Lagerpunkte für die Schwenkbacken dienen. Die Befestigungsabschnitte können lösbar an der Haltefläche des Grundkörpers angeordnet sein. Die Befestigungsabschnitte können Befestigungsflächen für die Schwenkbacken aufweisen, wobei sich die Normalen der Befestigungsfläche parallel zu der Haltefläche des Grundkörpers erstrecken können.

Weiterhin hat es sich als vorteilhaft erwiesen, wenn das erste Halteelement sich zwischen den beiden Schwenkbacken hindurch erstreckt. Auf den Befestigungsabschnitten können die Schwenkbacken angeordnet sein, insbesondere ist es vorteilhaft, wenn die Schwenkbacken lösbar über Schraubverbindungen mit den Befestigungsabschnitten verbindbar sind. Das erste Halteelement kann zwischen den beiden Schwenkbacken hindurchgeschwenkt werden. Weiterhin kann das erste Halteelement auch zwischen den beiden Befestigungsabschnitten hindurchgeschwenkt werden. Über die Befestigungsabschnitte und die Schwenkbacken kann das erste Halteelement derart beabstandet von der Haltefläche des Grundkörpers angeordnet sein, dass dieses relativ gegenüber dem Grundkörper bewegt, insbesondere verschwenkt, werden kann.

Es ist vorgesehen, dass das erste Halteelement ein Schwenkelement zur Verbindung mit dem Grundkörper aufweist und dass das Aufnahmeelement gegenüber dem Schwenkelement bewegbar ist. Vorteilhaft ist es, wenn das Aufnahmeelement gegenüber dem Schwenkelement linearbewegbar ist. Das Schwenkelement kann ferner mit den Schwenkbacken verbunden sein, so dass das Schwenkelement eine Bewegung des ersten Halteelements um die Schwenkachse ermöglicht. Die Schwenkachse kann sich durch das Schwenkelement und die Schwenkbacken hindurch erstrecken. Das Schwenkelement kann als Schwenkplatte ausgebildet sein, an welcher das Aufnahmeelement gelagert sein kann.

Das Aufnahmeelement kann über die Handfeuerwaffe relativ gegenüber dem Schwenkelement und damit auch gegenüber dem zweiten Halteelement bewegbar sein. Gleichwohl kann das Aufnahmeelement zusammen mit dem Schwenkelement um die Schwenkachse verschwenkt werden. Die Waffenrohrmündung kann zunächst in das Aufnahmeelement bzw. in die Aufnahmebuchse eingeführt werden. Dann kann das Aufnahmeelement relativ gegenüber dem Schwenkelement bewegt werden. Dabei bewegt sich die Handfeuerwaffe gleichzeitig auch gegenüber dem zweiten Halteelement. Die Handfeuerwaffe kann dann um die Schwenkachse verschwenkt werden, bis die Handfeuerwaffe auf der Haltefläche des Grundkörpers aufliegt. Bei dieser Schwenkbewegung kann das hintere Ende der Handfeuerwaffe vor das zweite Halteelement verschwenkt werden, so dass die Waffe in dieser Stellung in einer Linie mit dem ersten Halteelement und mit dem zweiten Halteelement liegt. Die Handfeuerwaffe kann dann zusammen mit dem Aufnahmeelement in entgegengesetzter Richtung bewegt, insbesondere linear bewegt, werden, so dass der Waffenlauf vom zweiten Halteelement gehaltert werden kann. In dieser Halterungsstellung ist die Handfeuerwaffe sicher in der Haltevorrichtung verstaut bzw. gehaltert.

Weiterhin hat es sich als vorteilhaft erwiesen, wenn das Aufnahmeelement entgegen der Kraft eines Federelements gegenüber dem Schwenkelement bewegbar ist. Die Feder kann dafür sorgen, dass die Handfeuerwaffe von dem ersten Halteelement entgegen der Spannrichtung gegen das zweite Halteelement gedrückt wird. Insofern kann die Feder dafür sorgen, dass die Handfeuerwaffe in der gehalterten Stellung zwischen den beiden Haltelementen eingeklemmt und sicher gehalten ist. Bei dem Federelement kann es sich um eine Druckfeder, insbesondere um eine Spiraldruckfeder handeln. Das Federelement kann zwischen dem Aufnahmeelement und dem Schwenkelement angeordnet sein. Das Schwenkelement kann eine insbesondere zylindrische oder topfförmige Federaufnahme aufweisen, welche das Federelement seitlich stützen kann. Die Federaufnahme kann als Linearführung für das Aufnahmeelement fungieren, die eine lineare Bewegung in Spannrichtung erlaubt und führt, aber eine anderweitige Bewegung des Aufnahmeelements verhindert. Dies ermöglicht eine bessere Stabilität des ersten Halteelements. Die Feder kann die Vorspannkraft des ersten Halteelements bereitstellen.

Weiterhin hat es sich als vorteilhaft erwiesen, wenn das erste Halteelement eine Führungseinrichtung zur Führung der Bewegung des Aufnahmeelements gegenüber dem Schwenkelement aufweist. Durch die Führungseinrichtung kann die insbesondere lineare Bewegung des Aufnahmeelements gegenüber dem Schwenkelement sicher geführt und somit vordefiniert sein. Im Hinblick auf die Führungseinrichtung hat es sich als vorteilhaft erwiesen, wenn diese mindestens einen, insbesondere vierm Führungsstifte aufweist, die zur Führung der Bewegung des Aufnahmeelements gegenüber dem Schwenkelement in jeweils einer Stiftführung geführt sind. Über diese Führungsstifte kann auf konstruktiv einfache Weise eine zuverlässige Führung des Aufnahmeelements gegenüber dem Schwenkelement erreicht werden. Die Führungsstifte können fest mit dem Schwenkelement verbunden sein und die Stiftführungen können Teil des Aufnahmeelements sein. Um eine Bewegung des Aufnahmeelements gegenüber dem Schwenkelement zu begrenzen, können die Führungsstifte entsprechende Anschläge aufweisen.

Bei einer Bewegung des Aufnahmeelements gegenüber dem Schwenkelement bewegen sich die Stifte in den Stiftführungen. Um die Handfeuerwaffe aus der Halterung zu entnehmen, muss das Aufnahmeelement um den Spannweg gegenüber dem Schwenkelement und entgegen der Kraft des Federelements bewegt werden. Bei dieser Bewegung wird der Waffenschaft der Handfeuerwaffe nach vorne aus dem zweiten Halteelement gezogen, bis dieser nicht mehr im zweiten Halteelement gehaltert ist. In dieser Freigabestellung kann die Handfeuerwaffe dann zusammen mit dem ersten Halteelement um die Schwenkachse verschwenkt und die Handfeuerwaffe dann entnommen werden.

Im Hinblick auf das zweite Halteelement hat es sich als vorteilhaft erwiesen, wenn dieses derart ausgestaltet ist, dass es den Waffenschaft der Handfeuerwaffe in der Haltestellung umschließen kann. Das zweite Halteelement kann insofern als Halteschale ausgestaltet sein, welche eine formschlüssige Halterung der Handfeuerwaffe ermöglicht. Das zweite Halteelement kann derart ausgestaltet sein, dass dieses den Waffenschaft in der Halterungsstellung umschließt. Wenn die Waffe in Spannrichtung um den Spannweg bewegt wird, wird der Waffenschaft aus den zweiten Halteelement herausgezogen. Wenn die Waffe dann um die Schwenkachse verschwenkt wurde, kann die Waffe auch entgegen der Spannrichtung aus dem ersten Halteelement herausgezogen werden. Das zweite Halteelement kann auf den Spannweg des ersten Halteelements abgestimmt sein, so dass der Waffenschaft an dem zweiten Halteelement vorgeschwenkt werden kann, wenn die Waffe um den Spannweg in Spannrichtung bewegt wurde. Das zweite Halteelement kann somit eine sich parallel zu der Haltefläche erstreckende Haltefläche aufweisen, die gleich oder kürzer als der Spannweg ist. Wenn die Waffe entsprechend um den Spannweg bewegt wurde, kann die Waffe um die Schwenkachse verschwenkt und entnommen werden.

Im Hinblick auf die eingangs beschriebene Aufgabe wird weiterhin eine Haltevorrichtung mit einer Handfeuerwaffe vorgeschlagen. Die Handfeuerwaffe kann in der vorstehend beschriebenen Weise ausgestaltet sein.

Weiterhin stellt sich die Erfindung die **Aufgabe**, ein Verfahren anzugehen, welches gleichzeitig eine einfache Entnahme sowie aber auch eine einfache und sichere Verstauung einer Handfeuerwaffe in einer Haltevorrichtung ermöglicht.

Diese Aufgabe wir mit einem Verfahren zur lagegesicherten Halterung einer Handfeuerwaffe mit einer Haltevorrichtung **gelöst** , welches die Merkmale des Patentanspruchs 14 aufweist.

Vorteile und Weiterbildungen des Verfahrens ergeben sich auch aus den im Hinblick auf die Haltevorrichtungen beschriebenen Weiterbildungen und Vorteilen.

Im Hinblick auf das Verfahren hat es sich als vorteilhaft erwiesen, wenn die Handfeuerwaffe zur Entnahme aus der Haltervorrichtung zunächst um den Spannweg in Spannrichtung bewegt wird, bis der Waffenschaft nicht mehr in dem zweiten Halteelement gehaltert ist. Die Waffe wird dabei entgegen der Federkraft des Federelements, insbesondere nach vorne, bewegt. In einem nächsten Schritt kann die Handfeuerwaffe dann zusammen mit dem ersten Halteelement um die Schwenkachse verschwenkt werden, wobei sich der Waffenlauf am zweiten Halteelement vorbei bewegt. In dieser ausgeschwenkten Stellung kann die Handfeuerwaffe dann entgegen der Spannrichtung aus dem ersten Halteelement gezogen werden. Zur Verstauung der Waffe in der Haltevorrichtung werden die Schritte entsprechend in umgekehrter Reihenfolge durchgeführt.

Weitere Einzelheiten und Vorteile der Erfindung sollen unter Zuhilfenahme der nachstehenden Figuren näher erläutert werden. Darin zeigen:
- Fig. 1: eine Haltevorrichtung ohne Waffe in einer perspektivischen Seitenansicht;
- Fig. 2: eine Haltevorrichtung gemäß Fig. 1 in einer Draufsicht;
- Fig. 3a-3c: das erste Halteelement in verschiedenen Ansichten;
- Fig. 4a - 4b: das erste Halteelement in Schnittansichten aus zwei verschiedenen Richtungen.

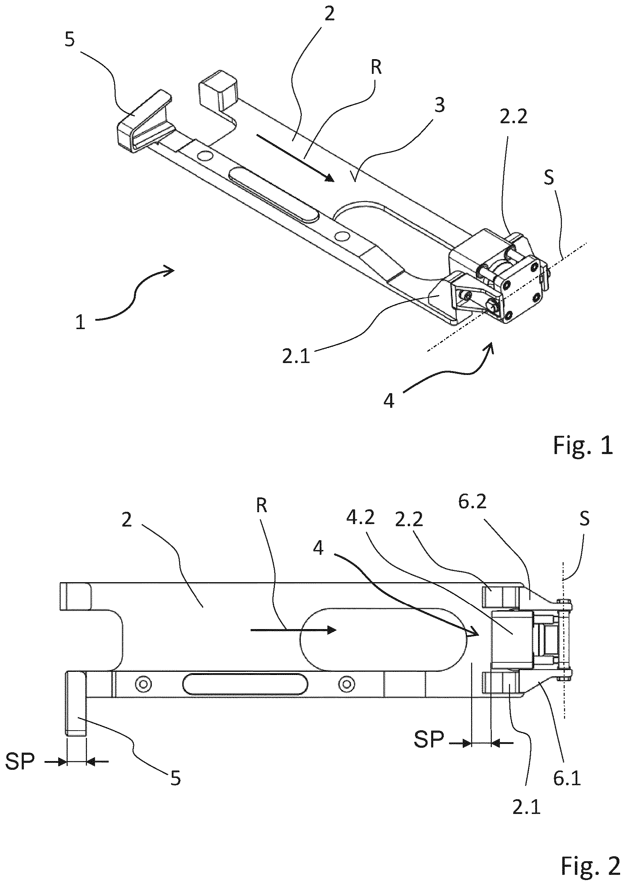

Um Handfeuerwaffen beispielsweise in einem Fahrzeug sicher zu verstauen, so dass diese auch bei holprigen Geländefahrten sicher gehalten werden können, kann die in der Fig. 1 dargestellte Haltevorrichtung 1 eingesetzt werden.

Die Haltevorrichtung 1 weist einen Grundkörper 2 auf, an dem ein erstes Halteelement 4 und ein zweites Halteelement 5 angeordnet sind. Das erste, vordere Halteelement 4 dient zur Halterung der Rohrmündung der Waffe und das zweite, hintere Halteelement 5 dient zur Aufnahme bzw. zur Halterung des Waffenschaftes. Die beiden Halteelemente 4, 5 bilden somit eine Zweipunktlagerung für eine Handfeuerwaffe, die eine sichere Halterung ermöglicht. Der Abstand der beiden Halteelemente 4, 5 ist auf die Größe bzw. auf die Länge der Handfeuerwaffe angepasst.

In der Fig. 1 ist die Halterungsstellung dargestellt, bei der das erste Halteelement 4 die Handfeuerwaffe aufgrund einer Vorspannkraft gegen das zweite Halteelement 5 drückt. In dieser Stellung ist die Handfeuerwaffe in der Haltevorrichtung 1 gesichert und kann sich gegenüber dieser nicht ohne weiteres bewegen. Da die Waffe aufgrund der Ausgestaltung der beiden Halteelemente 4, 5 nicht in Normalenrichtung zur Haltefläche 3 des Grundkörpers 2 bewegbar ist, ist die Waffe somit sicher in der Haltevorrichtung 1 gehaltert. Der besseren Übersichtlichkeit halber ist die Waffe nicht mit dargestellt.

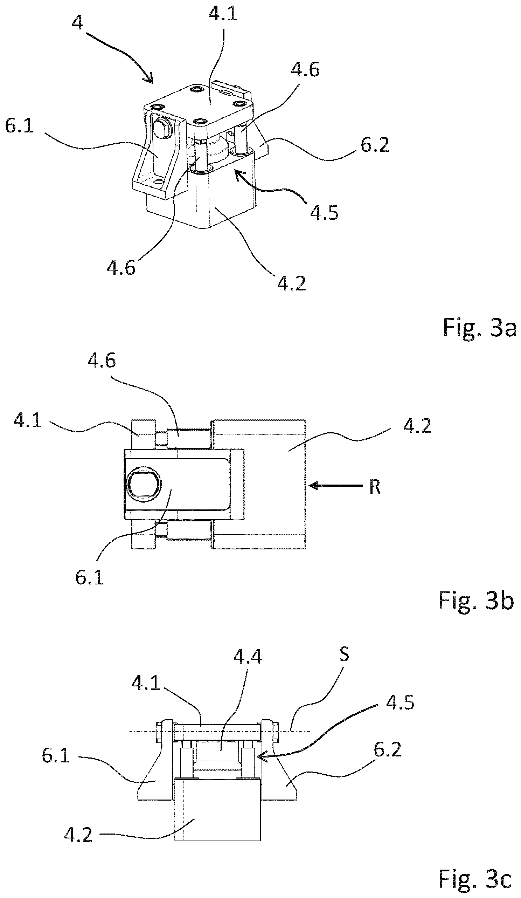

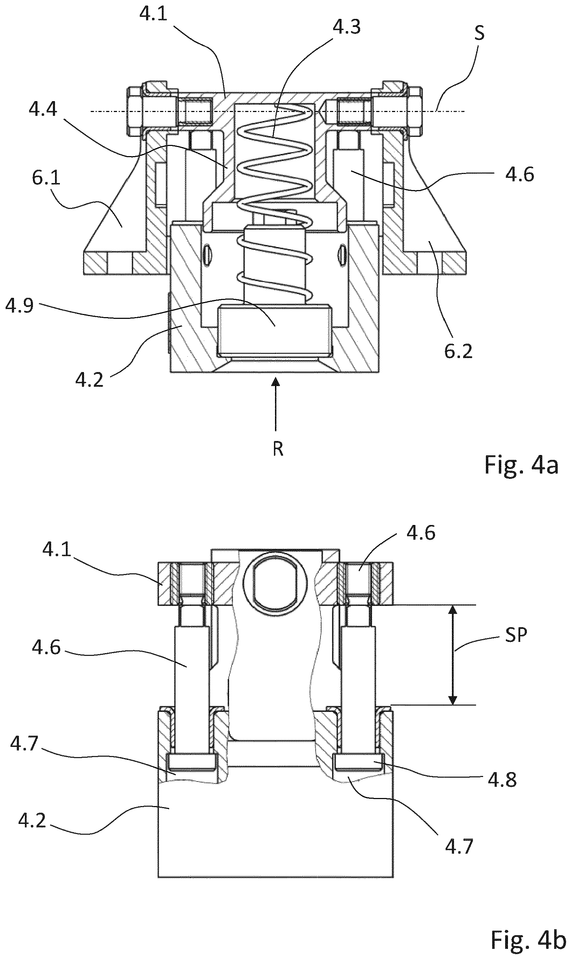

Um die Handfeuerwaffe aus der Haltevorrichtung 1 zu entnehmen, muss diese zunächst parallel zu der Haltefläche 3 des Grundkörpers 2 in Spannrichtung R bewegt werden. Um eine entsprechende Bewegung der Handfeuerwaffe gegenüber dem Grundkörper 2 zu ermöglichen, weist das erste Halteelement 4 ein linear bewegliches Aufnahmeelement 4.2 auf. Die genauere Ausgestaltung des ersten Halteelements 4 wird nachfolgend unter Zuhilfenahme der Fig. 3 und 4 noch näher erläutert werden.

Wenn die Handfeuerwaffe in Spannrichtung R bewegt wurde, befindet sich die Haltevorrichtung 1 in der in Fig. 2 dargestellten Freigabestellung. Es ist zu erkennen, dass das erste Halteelement 4 bzw. das Aufnahmeelement 4.2 des ersten Halteelements 4 aus der in Fig. 1 dargestellten Stellung in Richtung R um den Spannweg SP bewegt wurde. Aufgrund der Bewegung der Handfeuerwaffe um den Spannweg SP umgreift das zweite Halteelement 5 den Waffenschaft der Handfeuerwaffe nicht mehr, sondern dieser liegt vielmehr vor dem zweiten Halteelement 5.

Da das zweite Halteelement 5 den Waffenschaft in dieser Stellung nicht mehr umgreift, kann die Handfeuerwaffe zusammen mit dem ersten Halteelement 4 um die Schwenkachse S verschwenkt werden. In der Halterungsstellung verhindert das zweite Halteelement 5 eine entsprechende Schwenkbewegung. Die Schwenkachse S verläuft parallel zur Haltefläche 3 des Grundkörpers 2, so dass sich die Handfeuerwaffe seitlich ausschwenken lässt. Während des Ausschwenkens bleibt der vordere Teil des Waffenrohres bzw. die Waffenrohrmündung im ersten Halteelement 4 stecken. Der Druck auf die Handfeuerwaffe in Richtung R muss dabei aufrecht erhalten bleiben bis das Schaftende der Handfeuerwaffe am hinteren Halteelement 5 vorbeigeschwenkt wurde. Sodann kann die Handfeuerwaffe auch aus dem ersten Halteelement 4 entgegen der Spannrichtung R herausgezogen und so von der Haltevorrichtung 1 entfernt werden.

Zur Verstauung der Handfeuerwaffe in der Haltevorrichtung 1 muss die Waffenrohrmündung zunächst in das erste Halteelement 4 eingelegt und diese dann in Richtung der Waffenrohrachse bzw. in Spannrichtung R entgegen der Vorspannkraft in das erste Halteelement 4 hineingedrückt werden. Dabei bewegt sich die Waffe zusammen mit dem Aufnahmeelement 4.2 des ersten Halteelements 4 um den Spannweg SP. Die Handfeuerwaffe kann dann zusammen mit dem ersten Halteelement 4 um die Schwenkachse S verschwenkt werden. Der Waffenschaft bewegt sich dabei an der vorderen Kante des Halteelements 5 vorbei. Wenn die Handfeuerwaffe parallel zum Grundkörper 2 ausgerichtet ist, kann die Handfeuerwaffe losgelassen werden, so dass sich diese aufgrund der Vorspannkraft entgegen der Spannrichtung R um den Spannweg SP bewegt und das erste Halteelement 4 die Handfeuerwaffe in das zweite Halteelement 5 drückt. Die Waffe ist in dieser Stellung sicher in der Haltevorrichtung 1 gehalten. Denn die Vorspannkraft bzw. die Kraft des nachstehend noch genauer beschriebenen Federelements 4.3 ist derart bemessen, dass die Handfeuerwaffe sich nicht selbstständig in Spannrichtung R bewegen kann, so dass die Gefahr eines unbeabsichtigten Lösens nicht besteht.

Wie dies zudem in der perspektivischen Darstellung der Fig. 1 zu erkennen ist, ist das zweite Halteelement 5 als Aufnahmeschale ausgestaltet, welche den Schaft der Handfeuerwaffe in der gehalterten Stellung seitlich umschließt.

Die Ausgestaltung des ersten Halteelements 4 soll nachfolgend anhand der Fig. 3 und 4 näher erläutert werden. Wie diese in den Fig. 3a, 3b, 3c zu erkennen ist, weist das erste Halteelement 4 ein Aufnahmeelement 4.2 auf, in welches die Waffenrohrmündung einsteckbar ist. Dieses Aufnahmeelement 4.2 ist in Spannrichtung R entgegen der Kraft des Federelements 4.3 zumindest um den Spannweg SP linear bewegbar. Das Aufnahmeelement 4.2 ist über eine Führungseinrichtung 4.5 mit einem Schwenkelement 4.1 verbunden, so dass das Aufnahmeelement 4.2 linear gegenüber dem Schwenkelement 4.1 bewegbar ist. Das Schwenkelement 4.1 ist als Schwenkplatte ausgestaltet und zwischen zwei Schwenkbacken 6.1, 6.2 nach Art einer Wiege aufgehängt. Wie dies in der Fig. 1 zu erkennen ist, sind die beiden Schwenkbacken 6.1, 6.2 über Befestigungsabschnitte 2.1, 2.2 mit dem Grundkörper 2 verbunden und ermöglichen so eine Schwenkbewegung des Schwenkelements 4.1 bzw. des ersten Halteelements 4 um die Schwenkachse S gegenüber dem Grundkörper 2.

In den Schnittansichten der Fig. 4a und 4b ist der innere Aufbau des ersten Halteelements 4 sowie auch das Federelement 4.3 und die Führungseinrichtung 4.5 zu erkennen. Die Führungseinrichtung 4.5 umfasst vier Führungsstifte 4.6, die in am Aufnahmeelement 4.2 angeordneten Stiftführungen 4.7 geführt sind. Wenn die Waffenrohrmündung in das Aufnahmeelement 4.2 eingesteckt wird und die Handfeuerwaffe in Richtung R entgegen der Kraft des Federelements 4.3 bewegt wird, gleiten die Stiftführungen 4.7 über die feststehenden Führungsstifte 4.6. Wie in der Fig. 4b zu erkennen, kann das Aufnahmeelement 4.2 maximal so weit gegenüber dem Schwenkelement 4.1 linear bewegt werden, bis das Aufnahmeelement 4.2 am Schwenkelement 4.1 anschlägt. In der entgegengesetzten Richtung verhindern die Anschläge 4.8 an den Köpfen der Führungsstifte 4.6 eine Bewegung des Aufnahmeelements 4.2 entgegen der Spannrichtung R über die in der Fig. 4b gezeigte Endstellung hinaus.

In der Fig. 4a ist zudem zu erkennen, dass das Aufnahmeelement 4.2 eine Aufnahmebuchse 4.9 aufweist, die die Waffenrohrmündung spielfrei umschließen kann. Um das Einführen der Waffenrohrmündung in die Aufnahmebuchse 4.9 zu erleichtern, weist das Aufnahmeelement 4.2 eine Einführhilfe in Form einen rings um die Öffnung der Aufnahmebuchse 4.9 umlaufenden Einführkonus auf. Diese Einführhilfe sorgt dafür, dass sich die Waffenrohrmündung beim Einführen automatisch zentriert und dann in der eingeführten Stellung spielfrei in der topfförmigen Aufnahmebuchse 4.9 aufgenommen ist.

Das Federelement 4.3 ist im Schwenkelement 4.1 gelagert, so dass ein seitliches Ausbrechen des Federelements 4.3 verhindert wird. Bei einer Bewegung des Aufnahmeelements 4.2 gegenüber dem Schwenkelement 4.1 taucht die zylinderförmig Federaufnahme 4.4 in das kopfförmige Aufnahmeelement 4.2 ein. Sowohl die in den Stiftführungen 4.7 geführten Führungsstifte 4.6 als auch die Federaufnahme 4.4 fungieren somit als Führung für die Aufnahmebuchse 4.9 bzw. das Aufnahmeelement 4.2.

Die beschriebene Haltevorrichtung 1 ermöglicht eine sehr einfache und intuitive Verstauung einer Handfeuerwaffe, sorgt aber gleichwohl auch dafür, dass die entsprechende Handfeuerwaffe sicher gehaltert wird und in der Haltevorrichtung 1 nicht klappert.

### Bezugszeichen:

- 1: Haltevorrichtung
- 2: Grundkörper
- 2.1: Befestigungsabschnitt
- 2.2: Befestigungsabschnitt
- 3: Haltefläche
- 4: erstes Halteelement
- 4.1: Schwenkelement
- 4.2: Aufnahmeelement
- 4.3: Federelement
- 4.4: Federaufnahme
- 4.5: Führungseinrichtung
- 4.6: Führungsstift
- 4.7: Stiftführung
- 4.8: Anschlag
- 4.9: Aufnahmebuchse
- 5: zweites Halteelement
- 6.1: Schwenkbacke
- 6.2: Schwenkbacke
- 10: Handfeuerwaffe
- 10.1: Waffenschaft
- 10.2: Waffenrohrmündung

- R: Spannrichtung
- S: Schwenkachse
- SP: Spannweg

## Patentansprüche

1. Haltevorrichtung (1) zur lagegesicherten Halterung einer Handfeuerwaffe, mit einem Grundkörper (2) und einem an einer Haltefläche (3) des Grundkörpers (2) angeordneten ersten Halteelement (4) zur Halterung der Waffenrohrmündung und einem zweiten Halteelement (5) zur Halterung des Waffenschafts, **dadurch gekennzeichnet, dass** das erste Halteelement (4) schwenkbeweglich mit dem Grundkörper (2) verbunden ist, wobei sich die Schwenkachse (S) parallel zu der Haltefläche (3) des Grundkörpers (2) erstreckt und wobei das erste Halteelement (4) ein Aufnahmeelement (4.2) zur Aufnahme der Waffenrohrmündung aufweist, wobei das erste Halteelement (4) ein Schwenkelement (4.1) zur Verbindung mit dem Grundkörper (2) aufweist, wobei das Aufnahmeelement (4.2) gegenüber dem Schwenkelement (4.1) bewegbar ist.

2. Haltevorrichtung (1) nach Anspruch 1, **dadurch gekennzeichnet, dass** das Aufnahmeelement (4.2) eine die Waffenrohrmündung spielfrei umschließende Aufnahmebuchse (4.9) aufweist.

3. Haltevorrichtung (1) nach einem der vorhergehenden Ansprüche, **dadurch gekennzeichnet, dass** das Aufnahmeelement (4.2) eine topfförmige Aufnahmebuchse (4.9) aufweist.

4. Haltevorrichtung (1) nach einem der vorhergehenden Ansprüche, **dadurch gekennzeichnet, dass** das Aufnahmeelement (4.2) zur Vereinfachung der Einführung der Waffenrohrmündung in die Aufnahmebuchse (4.9) eine Einführhilfe, insbesondere einen Einführkonus, aufweist.

5. Haltevorrichtung (1) nach einem der vorhergehenden Ansprüche, **dadurch gekennzeichnet, dass** die Halteelemente (4, 5) in einer Halterungsstellung die Handfeuerwaffe zumindest in einer Richtung spielfrei haltern.

6. Haltevorrichtung (1) nach einem der vorhergehenden Ansprüche, **dadurch gekennzeichnet, dass** das erste Halteelement (4) schwenkbeweglich mit dem Grundkörper (2) verbunden ist.

7. Haltevorrichtung (1) nach einem der vorhergehenden Ansprüche, **dadurch gekennzeichnet, dass** das erste Halteelement (4) und das zweite Halteelement (5) nach Art einer Klemmhalterung zusammenwirken, in die die Handfeuerwaffe einklemmbar ist.

8. Haltevorrichtung (1) nach einem der vorhergehenden Ansprüche, **dadurch gekennzeichnet, dass** das Aufnahmeelement (4.2) in Richtung des zweiten Halteelements (5) vorgespannt ist.

9. Haltevorrichtung (1) nach einem der vorhergehenden Ansprüche, **dadurch gekennzeichnet, dass** das Aufnahmeelement (4.2), insbesondere durch die Handfeuerwaffe, entgegen der Vorspannkraft bewegbar ist.

10. Haltevorrichtung (1) nach einem der vorhergehenden Ansprüche, **dadurch gekennzeichnet, dass** das erste Halteelement (4) zwischen zwei mit dem Grundkörper (2) verbundenen Schwenkbacken (6.1, 6.2) angeordnet und mit diesen schwenkbeweglich verbunden ist.

11. Haltevorrichtung (1) nach einem der vorhergehenden Ansprüche, **dadurch gekennzeichnet, dass** das Aufnahmeelement (4.2) gegenüber dem Schwenkelement (4.1) insbesondere linearbewegbar ist.

12. Haltevorrichtung (1) nach einem der vorhergehenden Ansprüche, **dadurch gekennzeichnet, dass** das Aufnahmeelement (4.2) entgegen der Kraft eines Federelements (4.3) gegenüber dem Schwenkelement (4.1) bewegbar ist.

13. Haltevorrichtung (1)) nach einem der vorhergehenden Ansprüche, **dadurch gekennzeichnet, dass** das zweite Halteelement (5) derart ausgestaltet ist, dass es den Waffenschaft in der Halterungsstellung umschließt.

14. Verfahren zur lagegesicherten Halterung einer Handfeuerwaffe mit einer Haltevorrichtung (1) nach einem der vorhergehenden Ansprüche, aufweisend einen Grundkörper (2) und ein an einer Haltefläche (3) des Grundkörpers (2) angeordnetes erstes Halteelement (4) zur Halterung der Waffenrohrmündung und ein zweites Halteelement (5) zur Halterung des Waffenschafts,
**dadurch gekennzeichnet,**
**dass** die Handfeuerwaffe zusammen mit einem der Halteelemente (4, 5) gegenüber dem Grundkörper (2) verschwenkt wird, wobei sich die Schwenkachse (S) parallel zu der Haltefläche (3) des Grundkörpers (2) erstreckt.

## Claims

1. Holding device (1) for the positionally secured mounting of small arms, having a main body (2) and a first holding element (4) arranged on a holding face (3) of the main body (2) for holding the barrel muzzle, and having a second holding element (5) for holding the gun stock, **characterized in that** the first holding element (4) is connected to the main body (2) in a pivotably movable manner, wherein the pivot axis (S) extends parallel to the holding face (3) of the main body (2), and wherein the first holding element (4) comprises a receiving element (4.2) for receiving the barrel muzzle, wherein the first holding element (4) has a pivoting element (4.1) for connecting to the main body (2), wherein the receiving element (4.2) is movable in respect of the pivoting element (4.1).

2. Holding device (1) according to Claim 1, **characterized in that** the receiving element (4.2) has a receiving bush (4.9) which surrounds the barrel muzzle in a play-free manner.

3. Holding device (1) according to one of the preceding claims, **characterized in that** the receiving element (4.2) has a cup-shaped receiving bush (4.9).

4. Holding device (1) according to one of the preceding claims, **characterized in that**, in order to simplify the introduction of the barrel muzzle into the receiving bush (4.9), the receiving element (4.2) has an insertion aid, in particular an insertion cone.

5. Holding device (1) according to one of the preceding claims, **characterized in that** the holding elements (4, 5) hold the small arms free from play in at least one direction in a mounting position.

6. Holding device (1) according to one of the preceding claims, **characterized in that** the first holding element (4) is connected to the main body (2) in a pivotably movable manner.

7. Holding device (1) according to one of the preceding claims, **characterized in that** the first holding element (4) and the second holding element (5) cooperate in the manner of a clamping mount, into which the handgun can be clamped.

8. Holding device (1) according to one of the preceding claims, **characterized in that** the receiving element (4.2) is pretensioned in the direction of the second holding element (5).

9. Holding device (1) according to one of the preceding claims, **characterized in that** the receiving element (4.2) can be moved against the pretensioning force, in particular by the small arms.

10. Holding device (1) according to one of the preceding claims, **characterized in that** the first holding element (4) is arranged between two pivoting jaws (6.1, 6.2) connected to the main body (2), and is connected thereto in a pivotably movable manner.

11. Holding device (1) according to one of the preceding claims, **characterized in that** the receiving element (4.2) is linearly movable, in particular, in respect of the pivoting element (4.1).

12. Holding device (1) according to one of the preceding claims, **characterized in that** the receiving element (4.2) is movable in respect of the pivoting element (4.1) against the force of a spring element (4.3).

13. Holding device (1) according to one of the preceding claims, **characterized in that** the second holding element (5) is configured in such a manner that it surrounds the gun stock in the mounting position.

14. Method for the positionally secured mounting of small arms, having a holding device (1) according to one of the preceding claims, comprising a main body (2) and a first holding element (4) arranged on a holding face (3) of the main body (2) for mounting the barrel muzzle, and having a second holding element (5) for mounting the gun stock,
**characterized in that**
the small arm is pivoted along with one of the holding elements (4, 5) in respect of the main body (2), wherein the pivot axis (S) extends parallel to the holding face (3) of the main body (2).

## Revendications

1. Dispositif de maintien (1) pour la fixation assujettie en position d'une arme de poing, comprenant un corps de base (2) et un premier élément de maintien (4) agencé sur une surface de maintien (3) du corps de base (2) pour la fixation de l'embouchure du canon et un deuxième élément de maintien (5) pour la fixation de la crosse, **caractérisé en ce que** le premier élément de maintien (4) est relié au corps de base (2) de manière à pouvoir pivoter, l'axe de pivotement (S) s'étendant parallèlement à la surface de maintien (3) du corps de base (2) et le premier élément de maintien (4) présentant un élément de réception (4.2) pour la réception de l'embouchure du canon,
le premier élément de maintien (4) présentant un élément pivotant (4.1) pour la liaison au corps de base (2), l'élément de réception (4.2) étant mobile par rapport à l'élément pivotant (4.1).

2. Dispositif de maintien (1) selon la revendication 1, **caractérisé en ce que** l'élément de réception (4.2) présente une douille de réception (4.9) entourant sans jeu l'embouchure du canon.

3. Dispositif de maintien (1) selon l'une quelconque des revendications précédentes, **caractérisé en ce que** l'élément de réception (4.2) présente une douille de réception (4.9) en forme de pot.

4. Dispositif de maintien (1) selon l'une quelconque des revendications précédentes, **caractérisé en ce que** l'élément de réception (4.2) présente un auxiliaire d'introduction, en particulier un cône d'introduction, pour faciliter l'introduction de l'embouchure du canon dans la douille de réception (4.9).

5. Dispositif de maintien (1) selon l'une quelconque des revendications précédentes, **caractérisé en ce que**, dans une position de maintien, les éléments de maintien (4, 5) maintiennent sans jeu l'arme de poing au moins dans une direction.

6. Dispositif de maintien (1) selon l'une quelconque des revendications précédentes, **caractérisé en ce que** le premier élément de maintien (4) est relié au corps de base (2) de manière à pouvoir pivoter.

7. Dispositif de maintien (1) selon l'une quelconque des revendications précédentes, **caractérisé en ce que** le premier élément de maintien (4) et le deuxième élément de maintien (5) coopèrent à la manière d'une fixation par serrage, dans laquelle l'arme de poing peut être serrée.

8. Dispositif de maintien (1) selon l'une quelconque des revendications précédentes, **caractérisé en ce que** l'élément de réception (4.2) est précontraint en direction du deuxième élément de maintien (5).

9. Dispositif de maintien (1) selon l'une quelconque des revendications précédentes, **caractérisé en ce que** l'élément de réception (4.2) peut être déplacé, en particulier par l'arme de poing, à l'encontre de la force de précontrainte.

10. Dispositif de maintien (1) selon l'une quelconque des revendications précédentes, **caractérisé en ce que** le premier élément de maintien (4) est agencé entre deux mâchoires pivotantes (6.1, 6.2) reliées au corps de base (2) et est relié à celles-ci de manière à pouvoir pivoter.

11. Dispositif de maintien (1) selon l'une quelconque des revendications précédentes, **caractérisé en ce que** l'élément de réception (4.2) est mobile, en particulier linéairement, par rapport à l'élément pivotant (4.1).

12. Dispositif de maintien (1) selon l'une quelconque des revendications précédentes, **caractérisé en ce que** l'élément de réception (4.2) peut être déplacé à l'encontre de la force d'un élément de ressort (4.3) par rapport à l'élément pivotant (4.1).

13. Dispositif de maintien (1) selon l'une quelconque des revendications précédentes, **caractérisé en ce que** le deuxième élément de maintien (5) est conçu de telle sorte qu'il entoure la crosse dans la position de fixation.

14. Procédé pour la fixation assujettie en position d'une arme de poing avec un dispositif de maintien (1) selon l'une quelconque des revendications précédentes, présentant un corps de base (2) et un premier élément de maintien (4) agencé sur une surface de maintien (3) du corps de base (2) pour la fixation de l'embouchure du canon et un deuxième élément de maintien (5) pour la fixation de la crosse,
**caractérisé en ce que**
l'arme de poing est pivotée conjointement avec un des éléments de maintien (4, 5) par rapport au corps de base (2), l'axe de pivotement (S) s'étendant parallèlement à la surface de maintien (3) du corps de base (2).
